Europäisches Patentamt

European Patent Office

Office européen des brevets

(11) Publication number: **0 303 394**
**A2**

# (12) EUROPEAN PATENT APPLICATION

(21) Application number: 88307175.5

(22) Date of filing: 03.08.88

(51) Int. Cl.⁴: **G05D 23/275**

(30) Priority: **11.08.87 GB 8718963**

(43) Date of publication of application:
**15.02.89 Bulletin 89/07**

(84) Designated Contracting States:
**AT BE CH DE ES FR GR IT LI LU NL SE**

(71) Applicant: **CREDA LIMITED**
**Creda Works Blythe Bridge**
**Stoke-on-Trent Staffordshire, ST11 9LJ(GB)**

(72) Inventor: **Lane, Richard John**
**Willowdene Moddershall**
**Stone Staffordshire ST15 8TG(GB)**

(74) Representative: **Waters, Jeffrey**
**The General Electric Company plc Central**
**Patent Department Marconi Research Centre**
**West Hanningfield Road**
**Great Baddow Chelmsford Essex CM2**
**8HN(GB)**

(54) Systems for controlling supply of electric current during off-peak supply period.

(57) In a system for controlling the supply of current to an electrically energised apparatus in which the current is separately metered for on-peak and off-peak periods, a battery powered timing means controls switch means 11 for establishing current conduction to the apparatus such as a storage heater 19 during the off-peak periods.

FIG 1

EP 0 303 394 A2

## Improvements relating to systems for controlling supply of electric current during off-peak supply period.

This invention concerns the control of the supply of current to an electrically energised apparatus which is required normally to be energised only during certain periods (herein called off-peak periods) during a basic period, normally 24 hours, and maintained in a non- energised state during the remaining periods (herein called the on-peak periods).

The form of apparatus for which this requirement most often applies is an electrical storage heater comprising a heat store, electrical heating means for heating said store, means providing for flow of air or other heat distributing fluid (herein for convenience referred to as air) into contact with the heat store and thereafter to a space or place to be heated. Preferably flow control means are provided for controlling the flow of such air.

The normal practice in premises in which electrical storage heaters are installed is for the supply of current to be taken from a main programming means which comprises a main switch, a main timing means, for operating the switch, metering means having metering units for separate registration in terms of energy consumed respectively over off-peak periods and on-peak periods, and output terminal means.

One of the most common arrangements (called Economy 7 Tariff) is for the main programming means to include a first set of output terminals (herein called all services terminals) connected to conductors which constitute the wiring of the premises and which feed any electrically energised apparatus which may be in use, and a separate set of terminals (herein called the off-peak terminals) which are connected to a separate set of conductors which constitute another part of the wiring of the premises and which feed only the heat storage heaters.

With this arrangement all current supplied during an off-peak period is registered separately on the off-peak metering unit. During an on-peak period it is not possible to bring the heating means of the heat storage heater, or any of them, into use for the purpose of charging the heat store because the off-peak terminals will have been disconnected from the incoming supply by the main switch means. The heat storage heater, or each of same, is ordinarily permanently connected to the conductors which are connected to the off-peak terminals.

In a somewhat modified system where the main programming means also includes all services terminals and off-peak terminals, the electrical storage heater, or each of same, may be connected to the conductors which are connected to the all services terminals, and the heating means which provides charging of the heat store concerned is prevented from being brought into use except during off-peak periods by a relay on the heat storage heater itself, such relay being operated by current supplied by the conductors connected to the off-peak terminals.

Both of these arrangements entails the provision of two separate wiring systems, one being connected to the all services terminals and the other the off-peak terminals. In the first case the latter carries the main charging current to the heating means of the heat storage heater concerned and in the second case it carries only a control current for operating the relay. This requirement for a dual wiring system is an obstacle to the more extensive use of storage heaters, or for that matter electrical apparatus in general, which might advantageously be brought into use during off-peak periods.

According to the present invention there is provided a system for controlling the supply of current to an electrically energised apparatus from a main programming means which includes switch means, timing means, and metering means, so connected and arranged as to provide at output terminals of the main programming means a current supply which is separately metered as energy consumed respectively in one or more periods (herein called off-peak periods) in a basic period (normally 24 hours) and for the remaining periods (herein called the on-peak periods), wherein the current is conveyed to the apparatus from a terminal means of the main programming means by conductor means which are energised during both on-peak and off-peak periods, and there is provided on or adjacent the apparatus itself or its connection point to the conductor means, a secondary programming means having input terminals connected to the conductor means and output terminals connected to the apparatus, switch means respectively connected between the input and output terminals for establishing current conduction between them, and battery powered timing means controlling operation of the switch means to establish said current conduction during the off-peak periods.

The battery powered timing means provides for establishment of said current conduction during off-peak periods each starting at a predetermined real time (time of day) and means are provided for maintaining the real time value when battery replacement is required without having to reset the timing means.

This avoids the necessity for providing on, or in association with, the battery powered timing means a display means for displaying real time and a manually operable reset means, thereby considerably reducing the cost of the timing means.

In one simple arrangement the timing means may include means for automatically resetting it to a further predetermined real time (herein called battery changing time) whenever the battery in use is removed. The user would then be instructed to replace the battery only at the battery changing time.

An indicator, such as a neon lamp, may be provided connected with the timing means in a circuit responsive to decline in the battery output (voltage or current) to signal to the user when battery changing is required. The indicator means may be connected to perform the dual function of indicating energisation of the output terminals during an off-peak period and, during an on-peak period, the need to effect battery replacement.

Alternatively, a further rechargeable battery may be provided to keep the timing means operative to maintain real time output during changing of the battery already referred to (which need not be rechargeable), the circuit providing for recharge of the further battery from either the input or the output terminals.

In this system it is necessary only for the premises in which the apparatus is required to be brought into use to be provided with a main programming means, as above defined, and one wiring system. It does not require the provision of two separate sets of terminals because the selective supply of current to the electrical apparatus concerned can be delivered through the normal conductors which constitute the wiring of the premises and which are available for the conduction of current at all times. Restriction to the use of the apparatus during off-peak periods is effected through the operation of the secondary programming means. Such secondary programming means can be made relatively simple and inexpensive compared with the main programming means and includes the override means providing the user with the option of using current during on-peak periods.

The main programming means ordinarily include a synchronous electric motor acting as the timing means and operating the switch means. To guard against temporary failure of the incoming supply the timing means normally includes a reserve or back-up clockwork mechanism which is able to maintain operation of the switch means in accordance with the desired off-peak on-peak programme over a period which typically may be as long as 36 hours.

Utilisation of a battery operated timing means for controlling the switch means of the secondary programming means avoids the necessity for such a complex and high cost provision, and makes it economically feasible to provide individual secondary programming means for respective pieces of electrical apparatus, or possibly a group thereof installed in a particular room of the premises.

There is no need to have a further wiring system constituting conductors connected in a separate set of off-peak terminals at the station at which the main programming means is ordinarily situated (usually close to the point at which main supply conductors enter the premises).

The invention will now be described, by way of example, with reference to the accompanying drawings wherein:-

FIGURES 1 and 2 illustrate conventional supply systems for supplying current to electrical storage heaters;

FIGURE 3 is an embodiment of a system in accordance with the present invention;

FIGURE 4 is a block schematic diagram of one embodiment of secondary programming means.

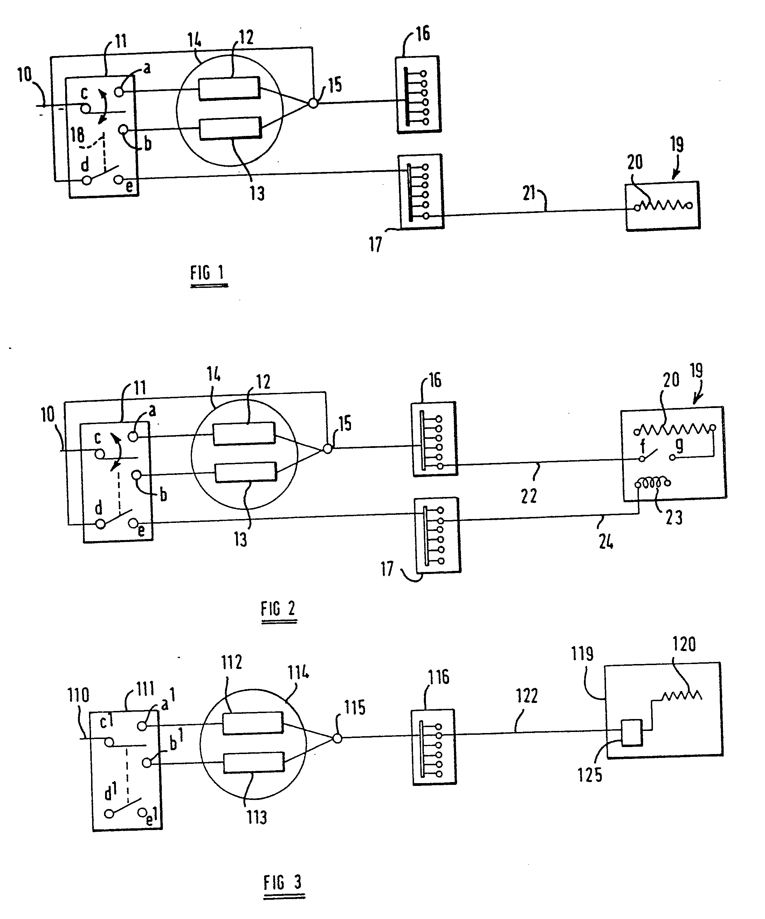

Referring to Figure 1, for simplicity only one incoming line 10 of the supply is shown, this being, for example, the "live" line. The neutral line is omitted. The live line 10 is connected to a main programming means comprising a main switch 11. This has contacts $a$, $b$ connected to respective meter units 12 and 13 of a metering means 14 selectively to bring these into operation during on-peak and off-peak periods, the output terminal 15 of the metering means being connected to contact $d$ of the main switch 11.

The main programming means includes two sets of output terminals 16 and 17 connected respectively to terminal 15 and to output terminal $e$ of the main switch.

Movable contacts of the main switch 11 are mechanically coupled as indicated at 18. When it is in its upper position during on-peak periods meter 12 is in use and all services terminal bank 16 is energised while off-peak terminal bank 17 is de-energised

In the lower position of the switch contacts $c$, $b$ and $d$, $e$ are closed with respect to each other and both terminal banks 16 and 17 are energised and current is metered as energy consumed on meter unit 13.

Apparatus such as an electric storage heater which is required to be energised only during off-peak periods is connected to an appropriate terminal of the terminal bank 17. Thus the heating element 20 is connected to the terminal bank 17 by conductor 21 which carries the main energising current for the heating element.

It will be understood that the main switch 11 is operated by a timing means such as a synchronous electric motor with clockwork reserve or back-up mechanism as already mentioned.

Figure 2 shows a modified arrangement in which parts corresponding to those already described are designated by like references.

In this case the storage heater 19 is connected to the all services terminal bank 16 and the main conductor 22 serves to convey the main energising current, in this case through contacts f, g of a relay 23 connected by conductor 24 to off-peak terminal bank 17. In this case conductor 24 conveys only controlling or pilot current by effecting some economy in the installation.

However, it is not possible in either system for the storage heater 19 to have its heat store charged by energisation of the heating element 20 during on-peak periods unless a manually operable change-over switch were provided, in the case of the arrangement of Figure 1 selectively to connect the heater 19 directly to the all services terminal bank or an appropriate connection point in the existing wiring connected thereto, and in the case of Figure 2 to short circuit contacts f, g of the relay. avoids the relatively expensive necessity of the additional wiring connected to the off-peak terminal banks 17. Further,

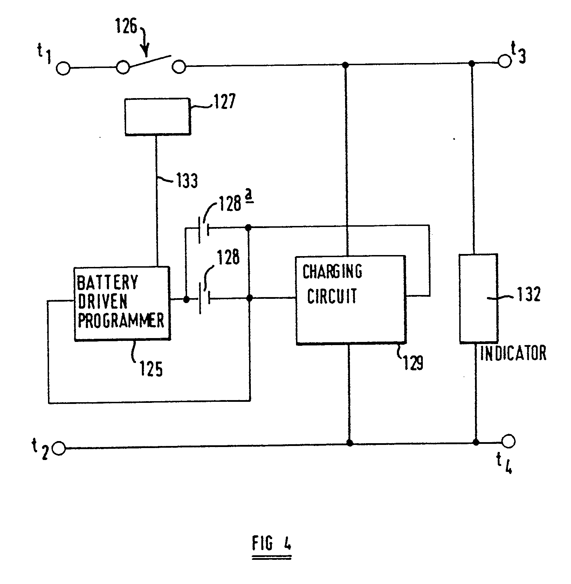

Referring now to Figure 3, parts corresponding to those already described are designated by like references with the prefix or a suffix 1 and the preceding description is to be deemed to apply. In this case all services terminal bank 116 is connected by a conductor 122 to the storage heater of heating element 120 through the intermediary of a secondary programming means 125 which is illustrated schematically in Figure 4.

The secondary programming means comprises input terminals t1 which would be connected to the conductor 122 and t2 which would be connected to the neutral line of the supply. Further, it comprises output terminals t3 connected to the heating element 120 and t4 which is the neutral terminal.

A relay contact 126 maintained open during on-peak periods and closed during off-peak periods is controlled by a timing means which comprises a battery energised electronic timer 125 providing an ouput on line 133 at a predetermined real time, e.g. 2400 hours, to a circuit 127 controlling energisation of the relay card for operating contacts 126, the contacts of 126 remaining closed during off-peak periods.

The battery 128 which may be of the pen-torch type serves as the power source.

The programmer may be provided with means for setting it automatically to a predetermined real time (say 2400 hours) wherein the battery 128 is removed for replacement. The programmer would have affixed to it an instruction to replace the battery only at this time. Alternatively, a secondary cell or rechargeable battery 128a may be connected in parallel with battery 128 to keep the programmer operating to provide true real time output on line 133 during battery charging. The rechargeable battery may be connected to a charging circuit 129 energised from neutral line and terminal t3.

Further, the secondary programming means is preferably provided with an indicator means 132 such as a glow lamp which would be energised during off-peak periods in the connection between the neutral line and terminal t3 or other appropriate connection.

The secondary programming means may of course be used with other forms of electrical apparatus which may be required to be brought into operation during off-peak periods, for example air conditioning apparatus, security apparatus and so forth.

## Claims

1. A system for controlling the supply of current to an electrically energised apparatus from a main programming means which includes switch means, timing means, and metering means, so connected and arranged as to provide at output terminals of the main programming means a current supply which is separately metered as energy consumed respectively in one or more periods (herein called off-peak periods) in a basic period (normally 24 hours) and for the remaining periods (herein called the on-peak periods), wherein the current is conveyed to the apparatus from a terminal means of the main programming means by conductor means which are energised during both on-peak and off-peak periods, and there is provided on or adjacent the apparatus itself or its connection point to the conductor means, a secondary programming means having input terminals connected to the conductor means and output terminals connected to the apparatus, switch means respectively connected between the input and output terminals for establishing current conduction between them, and battery powered timine means controlling operation of the switch means to establish said current conduction during the off-peak periods.

2. A system according to claim 1 wherein the battery powered timing means provides for establishment of said current conduction during off-peak periods each starting at a predetermined real time (time of day) and means are provided for maintaining the real time value when battery replacement is required without having to reset the timing means.

3. A system according to claim 2 wherein the battery powered timing means includes means for automatically resetting it to a further predetermined real time (herein called battery changing time) whenever the battery in use is removed.

4. A system according to any one of claims 1 to 3 wherein the secondary programming means further includes manually operable override means for establishing current conduction during on-peak periods at the option of the user.

5. A system according to any one of claims 1 to 4 wherein a rechargeable battery is provided in parallel with the first said battery and a charging circuit is provided for charging the rechargeable battery from current supplied from the main programming means along said conductor means.

6. A system according to claim 5 wherein the charging circuit is connected to the output terminals of the secondary programming means so as normally to be energised only during off-peak periods.

7. A system according to any one of the preceding claims wherein the apparatus which is energised comprises an electrically energised heater having a heat store, electrical heating means for heating said store, means providing for flow of air or other heat distributing fluid into contact with the heat store and thereafter a space or place to be heated, and preferably flow control means for controlling the flow of such air, the electrical heating means being connected to the output terminals of the secondary programming means.

8. An electrical storage heater comprising an electrically energised heater having a heat store, electrical heating means for heating said store, means providing for flow of air or other heat distributing fluid into contact with the heat store and thereafter a space or place to be heated, and preferably flow control means for controlling the flow of such air, and battery powered programming means mounted on or locally with respect to the heater for controlling the supply of current to the electrical heating means including switch means, for establishing current conduction to the heating means over at least one period (herein called the off-peak period) in a basic period, and for preventing conduction during the remaining period (herein called the on-peak period).

9. A programming means for use in a system according to any one of claims 1 to 6 comprising input terminals and output terminals, a switch means effectively connected between the input and output terminals, battery powered timing means for controlling the switch means to establish conduction between the input terminals and output terminals over at least one period (herein called the off-peak period) in a basic period and to prevent conduction during the remaining period (herein called the on-peak period).

10. A storage heater according to claim 9 wherein the programming means has the features of the secondary programming means defined in any one of claims 2 to 6.

11. A programming means according to claim 9 having the features of the secondary programming means defined in any one of claims 2 to 6.

12. Any novel feature or combination of features herein disclosed.

13. A system for controlling the supply of current to an electrically energised apparatus substantailly as herein described with reference to and as shown in Figure 3 of the accompanying drawings.

14. A system according to claim 11 wherein the secondary programming means is substantially as herein described with reference to and as shown in Figure 4 of the accompanying drawings.

FIG 1

FIG 2

FIG 3

FIG 4